# EUROPEAN PATENT APPLICATION

(11) **EP 3 923 187 A2**
(43) Date of publication of application: **15.12.2021**
(21) Application number: 21203423.5
(22) Date of filing: 19.10.2021
(51) Int. Cl.: G06K 9/00

(54) **METHOD FOR ASCERTAINING TARGET DETECTION CONFIDENCE LEVEL, ROADSIDE DEVICE, AND CLOUD CONTROL PLATFORM**

(30) Priority: 22.12.2020 CN 202011527234
(71) Applicant: Apollo Intelligent Connectivity (Beijing) Technology Co., Ltd., Beijing 100176 (CN)
(72) Inventor: Meng, Hao, Beijing, 100085 (CN)
(74) Representative: Nederlandsch Octrooibureau

(57) **Abstract**

The present disclosure discloses a method and apparatus for ascertaining a target detection confidence level, and relates to the field of intelligent traffic technology. A specific implementation includes: ascertaining, for each frame of a to-be-processed image in a to-be-processed video, a height of a target detection box in the to-be-processed image from a detection box corresponding one by one to each target object included in the to-be-processed image, the target detection box being at a highest position of the to-be-processed image; and ascertaining a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video. According to this solution, a simple method of ascertaining a confidence level is provided, and thus, the confidence level of the detection result corresponding to the to-be-processed image may be quickly ascertained.

## Description

### TECHNICAL FIELD

Embodiments of the present disclosure relate to the field of computer technology, specifically to the intelligent traffic technology, and more specifically to a method and apparatus for ascertaining a target detection confidence level, an electronic device, a storage medium, a roadside device, a cloud control platform and a computer program product.

### BACKGROUND

In the process of new infrastructure construction which is vigorously promoted by the country, a camera-based obstacle perception algorithm plays an important role. Here, the obstacle perception algorithm based on an artificial intelligence deep learning model has experienced rapid development. Under an abnormal condition (e.g., rain, snow, fog, night, and a video stream interruption), the recall and accuracy of a perception model for an obstacle may decrease to a certain extent.

### SUMMARY

Embodiments of the present disclosure provides a method and apparatus for ascertaining a target detection confidence level, an electronic device, a storage medium, a roadside device, a cloud control platform and a computer program product.

In a first aspect, an embodiment of the present disclosure provides a method for ascertaining a target detection confidence level, the method including: ascertaining, for each frame of a to-be-processed image in a to-be-processed video, a height of a target detection box in the to-be-processed image from a detection box corresponding one by one to each target object included in the to-be-processed image, the target detection box being at a highest position of the to-be-processed image; and ascertaining a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

In a second aspect, an embodiment of the present disclosure provides an apparatus for ascertaining a target detection confidence level, the apparatus including: a height ascertaining unit, configured to ascertain, for each frame of a to-be-processed image in a to-be-processed video, a height of a target detection box in the to-be-processed image from a detection box corresponding one by one to each target object included in the to-be-processed image, the target detection box being at a highest position of the to-be-processed image; and a confidence level ascertaining unit, configured to ascertain a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

In a third aspect, an embodiment of the present disclosure provides an electronic device, the device electronic including: at least one processor; and a memory, communicatively connected with the at least one processor; the memory storing instructions executable by the at least one processor, and the instructions, when executed by the at least one processor, causing the at least one processor to perform the method according to any embodiment of the first aspect.

In a fourth aspect, an embodiment of the present disclosure provides a non-transitory computer readable storage medium, storing computer instructions, the computer instructions being used to cause a computer to perform the method according to any embodiment of the first aspect.

In a fifth aspect, an embodiment of the present disclosure provides a roadside device, including the electronic device according to the third aspect.

In a sixth aspect, an embodiment of the present disclosure provides a cloud control platform, including the electronic device according to the third aspect.

In a seventh aspect, an embodiment of the present disclosure provides a computer program product, including a computer program, the computer program, when executed by a processor, implementing the method according to any embodiment of the first aspect.

According to the technology of embodiments of the present disclosure, the confidence level of the to-be-processed image is ascertained according to the height of the target detection box in the to-be-processed image. Accordingly, a simple method of ascertaining a target detection confidence level is provided, and thus, the confidence level of the detection result for the detection box in the to-be-processed image may be quickly ascertained.

It should be understood that the content described in this section is not intended to identify key or important features of embodiments of the present disclosure, nor is it intended to limit the scope of embodiments of the present disclosure. Other features of embodiments of the present disclosure may be easily understood by the following description.

### BRIEF DESCRIPTION OF THE DRAWINGS

The accompanying drawings are used for a better understanding of the scheme, and do not constitute a limitation to the present disclosure.
Fig. 1 is a diagram of an example system architecture in which embodiments of the present disclosure may be implemented;
Fig. 2 is a flowchart of a method for ascertaining a target detection confidence level according to an embodiment of the present disclosure;
Fig. 3 is a schematic diagram of an application scenario of the method for ascertaining a target detection confidence level according to an embodiment of the present disclosure;
Fig. 4 is a flowchart of the method for ascertaining a target detection confidence level according to another embodiment of the present disclosure;
Fig. 5 is a flowchart of an apparatus for ascertaining a target detection confidence level with cooperation and coordination according to an embodiment of the present disclosure; and
Fig. 6 is a schematic structural diagram of a computer system for implementing an electronic device/terminal device or a server according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

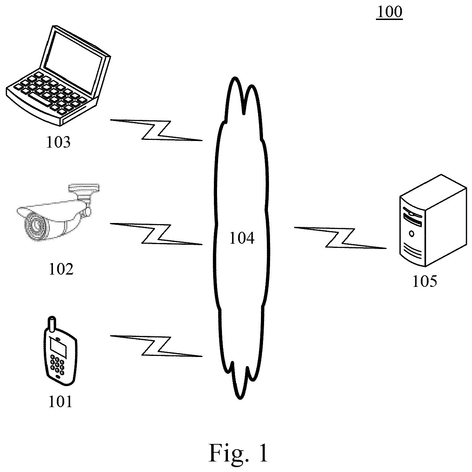

Fig. 1 illustrates an example system architecture 100 in which a method and apparatus for ascertaining a target detection confidence level according to embodiments of the present disclosure may be implemented.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

The terminal devices 101, 102 and 103 may be hardware devices or software that supports a network connection for data exchange and data processing. When being hardware, the terminal devices 101, 102 and 103 may be various electronic devices supporting functions such as a network connection function, an information acquisition function, an information exchange function, an information display function and an information processing function, the electronic devices including, but not limited to, a camera, a smartphone, a tablet computer, a vehicle-mounted computer, a laptop portable computer, a desktop computer, and the like. When being the software, the terminal devices 101, 102 and 103 may be installed in the above listed electronic devices. The terminal devices may be implemented as a plurality of pieces of software or a plurality of software modules (e.g., software or software modules for providing a distributed service), or as a single piece of software or a single software module, which will not be specifically defined here.

The server 105 may be a server providing various services. For example, the server 105 may be a backend processing server that receives a to-be-processed video captured by the terminal devices 101, 102 and 103, and ascertains a confidence level of a detection result for a detection box in a to-be-processed image in the to-be-processed video. For example, the backend processing server ascertains the confidence level of the detection result for the detection box in the to-be-processed image according to a height of a target detection box in a current to-be-processed image. As an example, the server 105 may be a cloud server.

It should be noted that the server may be hardware or software. When being the hardware, the server may be implemented as a distributed server cluster composed of a plurality of servers, or may be implemented as a single server. When being the software, the server may be implemented as a plurality of pieces of software or a plurality of software modules (e.g., software or software modules for providing a distributed service), or may be implemented as a single piece of software or a single software module, which will not be specifically defined here.

It should also be noted that the method for ascertaining a target detection confidence level provided in embodiments of the present disclosure may be performed by the server, performed by the terminal devices, or performed by the server and the terminal devices in cooperation with each other. Correspondingly, the parts (e.g., units or modules) included in the apparatus for ascertaining a target detection confidence level may be all provided in the server, all provided in the terminal devices, or respectively provided in the server and the terminal devices.

It should be appreciated that numbers of the terminal devices, the networks, and the servers in Fig. 1 are merely illustrative. Any number of terminal devices, networks, and servers may be provided based on actual requirements. When an electronic device on which the method for ascertaining a target detection confidence level is performed does not need to perform a data transmission with another electronic device, the system architecture may include only the electronic device (e.g., the server or the terminal device) on which the method for ascertaining a target detection confidence level is performed.

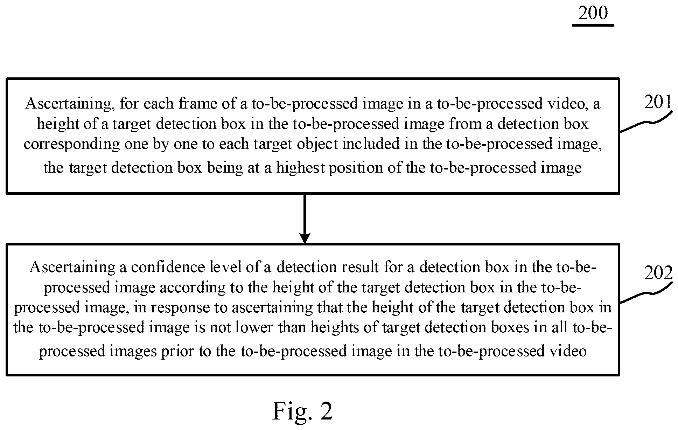

Further referring to Fig. 2, Fig. 2 illustrates a flow 200 of an embodiment of a method for ascertaining a target detection confidence level, the flow 200 including following steps.

Step 201, ascertaining, for each frame of a to-be-processed image in a to-be-processed video, a height of a target detection box in the to-be-processed image from a detection box corresponding one by one to each target object included in the to-be-processed image, the target detection box being at a highest position of the to-be-processed image.

In this embodiment, an executing body (e.g., the server in Fig. 1) of the method for ascertaining a target detection confidence level may acquire the to-be-processed video remotely or locally by means of a wired connection or a wireless connection. Here, the to-be-processed video may be a video captured by a video acquisition apparatus and including any content. As an example, the to-be-processed video may be a video captured by a surveillance camera and representing a traffic situation.

For the each frame of the to-be-processed image in the to-be-processed video, the above executing body may ascertain the detection box of the each target object in the to-be-processed image. Here, the target object may refer to all movable targets included in the to-be-processed image. As an example, the target object may be an object (e.g., a vehicle or a pedestrian) included in the to-be-processed image. The detection box is used to represent an area corresponding to the target object in the to-be-processed image. Each target object corresponds to a detection box.

As an example, the above executing body may ascertain the detection box of the target object in the to-be-processed image through a detection box recognition model. Here, the detection box recognition model is used to represent a corresponding relationship between the to-be-processed image and the detection box of the target object. The detection box recognition model may be obtained by training a network model such as a convolutional neural network, a recurrent neural network or a residual neural network based on a machine learning algorithm.

The above executing body compares the detection boxes of all target objects included in the to-be-processed image, ascertains the detection box at the highest position of the to-be-processed image as the target detection box, and ascertains the height of the target detection box in the to-be-processed image. Here, a lower edge of the to-be-processed image is used as a reference line when ascertaining the height of the detection box of the target object in the to-be-processed image.

In this embodiment, the above executing body may ascertain a height of any point in the detection box in the to-be-processed image as the height of the detection box in the to-be-processed image. As an example, the height of the detection box in the to-be-processed image may be ascertained based on a center point or a highest point of the detection box.

It may be appreciated that frames of to-be-processed images in the to-be-processed video have the same size, and thus, for different to-be-processed images, the heights of target detection boxes in the to-be-processed images are comparable.

Step 202, ascertaining a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

In this embodiment, in response to ascertaining that the height of the target detection box in the to-be-processed image is not lower than the heights of the target detection boxes in all the to-be-processed images prior to the to-be-processed image in the to-be-processed video, the above executing body may ascertain the confidence level of the detection result for the detection box in the to-be-processed image according to the height of the target detection box in the to-be-processed image.

As an example, the height of the target detection box in the to-be-processed image is positively correlated with the confidence level of the detection result for the detection box in the to-be-processed image. The higher the height of the target detection box in the to-be-processed image is (the farther the distance of the target that can be captured by the video acquisition apparatus of the to-be-processed video is), the higher the confidence level of the detection result corresponding to the to-be-processed image is. The lower the height of the target detection box in the to-be-processed image is (the closer the distance of the target that can be captured by the video acquisition apparatus of the to-be-processed video is), the lower the confidence level of the detection result corresponding to the to-be-processed image is.

For example, the video acquisition apparatus is a surveillance camera on a road, and the surveillance camera is generally categorized into a front-facing camera and a rear-facing camera. Here, the front-facing camera is used to represent a camera of which the lens is toward a direction in which the target represented by the target object drives away. In the to-be-processed video captured by the front-facing camera, the target object generally enters from the lower edge of a video screen and disappears from the upper edge of the video screen. The rear-facing camera is used to represent a camera of which the lens is toward a direction in which the target represented by the target object is coming. In the to-be-processed video captured by the rear-facing camera, the target object generally enters from the upper edge of a video screen and disappears from the lower edge of the video screen.

It may be appreciated that, in correspondence to the front-facing camera, when the target object is about to disappear from the video screen of the to-be-processed video, the target represented by the target object is farther from the front-facing camera. In correspondence to the rear-facing camera, when the target object enters the video screen of the to-be-processed video at first, the target represented by the target object is farther from the rear-facing camera.

Further, the above executing body may set a preset height, and ascertain a ratio of the height of the target detection box in the to-be-processed image to the preset height as the confidence level of the detection result corresponding to the to-be-processed image, thereby quantifying the confidence level of the detection result corresponding to the to-be-processed image. Here, the preset height may be a height of a detection box of a target object corresponding to a farthest target that can be captured by the video acquisition apparatus of the to-be-processed video in the to-be-processed image. Here, the target object is used to represent the imaging of the target in reality in the to-be-processed image.

As an example, the to-be-processed image is a 100th frame of to-be-processed image of the to-be-processed video, and the height of the target detection box in the to-be-processed image is not lower than the heights of the target detection boxes in 99 frames of preceding to-be-processed images. At this point, for the to-be-processed image, the ratio of the height of the target detection box in the to-be-processed image to the preset height is ascertained as the confidence level of the detection result corresponding to the to-be-processed image.

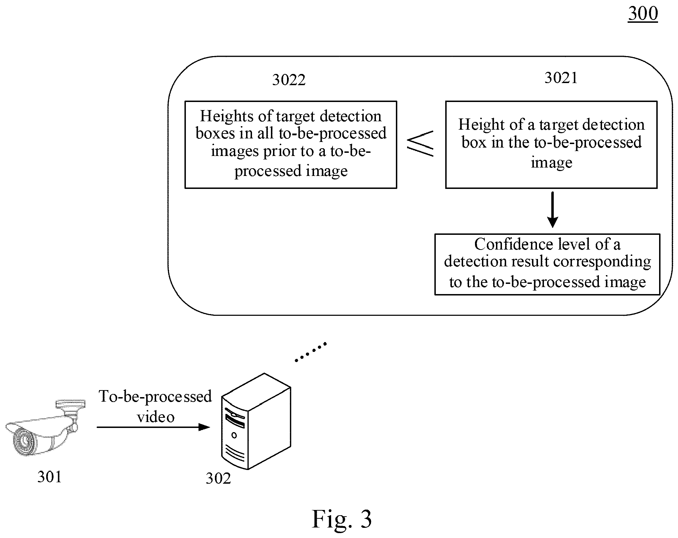

Further referring to Fig. 3, Fig. 3 is a schematic diagram of an application scenario of the method for ascertaining a target detection confidence level according to this embodiment. In the application scenario of Fig. 3, a camera 301 captures a to-be-processed video representing a traffic situation, and transmits the to-be-processed video to a server 302 in real time. For each frame of a to-be-processed image in the to-be-processed video, the server 302 ascertains a height of a target detection box in the to-be-processed image from a detection box corresponding one by one to each target object included in the to-be-processed image, the target detection box being at a highest position of the to-be-processed image. In response to ascertaining that the height 3021 of the target detection box in the to-be-processed image is not lower than heights 3022 of target detection boxes in all to-be-processed images prior to the to-be-processed image in the to-be-processed video, the server 302 ascertains a confidence level of a detection result for the detection box in the to-be-processed image according to the height of the target detection box in the to-be-processed image.

In this embodiment, the confidence level of the detection result for the detection box in the to-be-processed image is ascertained according to the height of the target detection box in the to-be-processed image. Accordingly, a simple method of ascertaining a target detection confidence level is provided, and thus, the confidence level of the detection result corresponding to the to-be-processed image may be quickly ascertained.

In some alternative implementations of this embodiment, the above executing body divides the to-be-processed image into a first number of target areas from a preset height to a lower edge. As an example, the above executing body may equally divide the to-be-processed image into the first number of target areas from the preset height to the lower edge.

In response to ascertaining that a second number of frames of consecutive to-be-processed images are present up to (and including) the to-be-processed image, and heights of target detection boxes in the second number of frames of to-be-processed images are lower than a maximum height of heights of target detection boxes in all to-be-processed images prior to the second number of frames of to-be-processed images, the above executing body may ascertain the confidence level of the detection result for the detection box in the to-be-processed image according to a confidence level corresponding to a target area in a preset state in the to-be-processed image.

Here, the preset state is used to represent that a to-be-processed image including the detection box of the target object having an intersection with the target area is present in a third number of frames of to-be-processed images up to (and including) the above to-be-processed image. Here, the first number, the second number and the third number may be specifically set according to an actual situation. For example, the first number may be set to 100, the second number may be set to 1000, and the third number may be set to 20.

It may be appreciated that, if the second number of frames of consecutive to-be-processed images are present up to (and including) the to-be-processed image, and the heights of the target detection boxes in the second number of frames of to-be-processed images are lower than the maximum height of the heights of the target detection boxes in all the to-be-processed images prior to the second number of frames of to-be-processed images, it indicates that, there may be a situation where the confidence level of the detection result of the to-be-processed image decreases. Meanwhile, in order to avoid a situation where the confidence level ascertained in a way that the confidence level of the detection result corresponding to the to-be-processed image is ascertained based on the height of the target detection box in the to-be-processed image is inaccurate in the situation where the quantity of target objects in the to-be-processed image is small or the heights of the target objects in the to-be-processed image are low, in this implementation, the confidence level of the detection result for the detection box in the to-be-processed image is ascertained according to the confidence level corresponding to the target area in the preset state in the to-be-processed image.

For example, the first number is 100, the second number is 1000, the third number is 20, and the to-be-processed image is a 2000th frame of image in the to-be-processed video. The maximum height of the target detection boxes ascertained through the 1st-1000th frames of to-be-processed images is A, and the heights of the target detection boxes in the 1001st-2000th frames of to-be-processed images are lower than A. At this point, a target area of which the state information is the preset state is ascertained from 100 target areas in the to-be-processed image. Here, for each target area in the preset state, there is at least one frame of to-be-processed image including the detection box of the target object having an intersection with the target area in the 20 frames of to-be-processed images up to (and including) the to-be-processed image.

The above executing body may select a target area from ascertained target areas in the preset state based on a preset selection approach, and ascertain the confidence level corresponding to the selected target area as the confidence level of the detection result for the detection box in the to-be-processed image. It may be appreciated that the above executing body may preset a corresponding confidence level for each target area. Here, the height of the target area in the to-be-processed image is positively correlated with the confidence level corresponding to the target area.

In some alternative implementations of this embodiment, for the each target area in the preset state in the to-be-processed image, the above executing body may ascertain, from a fourth number of frames of to-be-processed images up to (and including) the to-be-processed image, an average height of detection boxes having an intersection with the target area in the to-be-processed images; and then ascertain the confidence level of the detection result for the detection box in the to-be-processed image according to the average height. Here, the average height is positively correlated with the confidence level. The fourth number may be set according to an actual situation. As an example, the fourth number may be the same as the third number.

In some alternative implementations of this embodiment, the above executing body ascertains a target area at the highest position of the to-be-processed image from the target areas in the preset state in the to-be-processed image; and ascertains a confidence level corresponding to the target area at the highest position as the confidence level of the detection result for the detection box in the to-be-processed image.

It may be appreciated that when the time that a video acquisition apparatus acquires the third number of frames of to-be-processed images is short (e.g., 2 seconds), the probability that an abnormal condition occurs during this time is very small, and thus negligible. Therefore, if, in the third number of frames of to-be-processed images up to (and including) the to-be-processed image, there is a situation where a height of a target detection box in a to-be-processed image is high, (i.e., in the third number of frames of to-be-processed images up to (and including) the to-be-processed image, there is a to-be-processed image for which a detection result has a high confidence level), the above executing body may ascertain the high confidence level of the detection result corresponding to the to-be-processed image for which the detection result has the high confidence level as the confidence level of the detection result for the detection box in the to-be-processed image. In this implementation, in the target areas, the target area at the highest position of the to-be-processed image may represent the highest confidence level of the detection result in the to-be-processed image during this time.

In some alternative implementations of this embodiment, in response to ascertaining that the second number of frames of consecutive to-be-processed images are present up to (and including) the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that a trajectory of a target object disappears from the to-be-processed image, the above executing body ascertains the confidence level of the detection result for the detection box in the to-be-processed image according to the confidence level corresponding to the target area in the preset state in the to-be-processed image.

Here, the disappearance of the trajectory of the target object represents that, up to the to-be-processed image, the target object moves out of the capture range of the video acquisition apparatus of the to-be-processed video. In this implementation, the disappearance of the trajectory is mainly for a front-facing camera, and is specifically embodied as: the target object enters from the lower edge of the video screen of the to-be-processed video and disappears from the upper edge of the video screen.

It may be understood that when there is the situation where the above trajectory disappears, it indicates that, during the short time that the to-be-processed image is acquired, the video acquisition apparatus captures the to-be-processed image for which a detection result has a high confidence level, thereby further avoiding the situation where the confidence level ascertained in the way that the confidence level of the detection result corresponding to the to-be-processed image is ascertained based on the height of the target detection box in the to-be-processed image is inaccurate in the situation where the quantity of target objects in the to-be-processed image is small or the heights of the target objects in the to-be-processed image are low.

In some alternative implementations of this embodiment, the state of each target area in the first number of target areas is ascertained as follows.

From a to-be-processed image corresponding to the target area in a non-preset state to a current to-be-processed image, in response to ascertaining that a difference value between a number of to-be-processed images having a detection box corresponding to the target area and a number of to-be-processed images having no detection box corresponding to the target area is greater than a preset threshold value, the target area in the current to-be-processed image is determined as in the preset state.

From a to-be-processed image corresponding to the target area in the preset state to a current to-be-processed image, in response to ascertaining that a third number of frames of consecutive to-be-processed images having no detection box corresponding to the target area are present, the target area in the current to-be-processed image is determined as in the non-preset state.

As an example, for the each target area in the first number of target areas, the above executing body ascertains whether the state of the target area is the preset state through a preset variable M. Specifically, M is first initialized to 0 (corresponding to the non-preset state). Starting from the first frame of to-be-processed image in the to-be-processed video, in response to ascertaining that a detection box of the target object that has an intersection with the target area is present in the to-be-processed image, M=M+1; and in response to ascertaining that the detection box of the target object that has the intersection with the target area is not present in the to-be-processed image, M=M-1, until M reaches a preset threshold value, and at this point, the target area is updated from the non-preset state to the preset state. Here, the preset threshold value may be set according to an actual situation. As an example, the preset threshold value is 20. It may be appreciated that, during the change of M, there may be a situation where M becomes 0 again, and after becoming 0, M is no longer reduced.

After the target area is updated to the preset state, if the third number of frames of consecutive to-be-processed images having no detection box that has an intersection with the target area are present, M is set to 0, and the state of the target area is updated from the preset state to the non-preset state. Through this implementation, the state information corresponding to the each target area may be accurately ascertained.

In some alternative implementations of this embodiment, the above executing body may further ascertain a target to-be-processed image including a target object and closest to the to-be-processed image, in response to ascertaining that the second number of frames of consecutive to-be-processed images are present up to (and including) the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that the target object is not detected in the to-be-processed image; ascertain a detection box at the highest position of the to-be-processed image from historical trajectory information corresponding to the target object included in the target to-be-processed image; and ascertain the confidence level of the detection result for the detection box in the to-be-processed image according to a height of the detection box at the highest position in the to-be-processed image and the preset height.

This implementation is mainly for a situation where the video acquisition apparatus is a rear-facing camera. For the rear-facing camera, the target object is at a maximum height in the to-be-processed image when first entering the video screen of the to-be-processed video. Through this implementation, when the second number of frames of consecutive to-be-processed images are present up to (and including) the to-be-processed image, and the heights of the target detection boxes in the second number of frames of to-be-processed images are lower than the maximum height of the heights of the target detection boxes in all the to-be-processed images prior to the second number of frames of to-be-processed images, and when the target object is not detected in the to-be-processed image, a high confidence level is ascertained for the to-be-processed images, thereby improving the application range of embodiments of the present disclosure.

In some alternative implementations of this embodiment, the above executing body may further ascertain a confidence level of a detection result corresponding to a previous frame of the to-be-processed image as the confidence level of the detection result corresponding to the to-be-processed image, in response to ascertaining that the second number of frames of consecutive to-be-processed images in which the heights of the target detection boxes are lower than the maximum height of the heights of the target detection boxes in all the to-be-processed images prior to the second number of frames of to-be-processed images are not present up to (and including) the to-be-processed image. It may be understood that, when it is not explicitly ascertained that the confidence level of the detection result corresponding to the to-be-processed image decreases, the high confidence level of the detection result corresponding to the previous frame of the to-be-processed image is continuously used, thereby improving the accuracy of ascertaining the confidence level.

In some alternative implementations of this embodiment, the above executing body may further send the to-be-processed video and the confidence level information of the each frame of the to-be-processed image to a terminal device performing a subsequent operation on the to-be-processed video, such that the terminal device performs a corresponding operation according to the to-be-processed video and the confidence level information of the detection result corresponding to the each frame of the to-be-processed image.

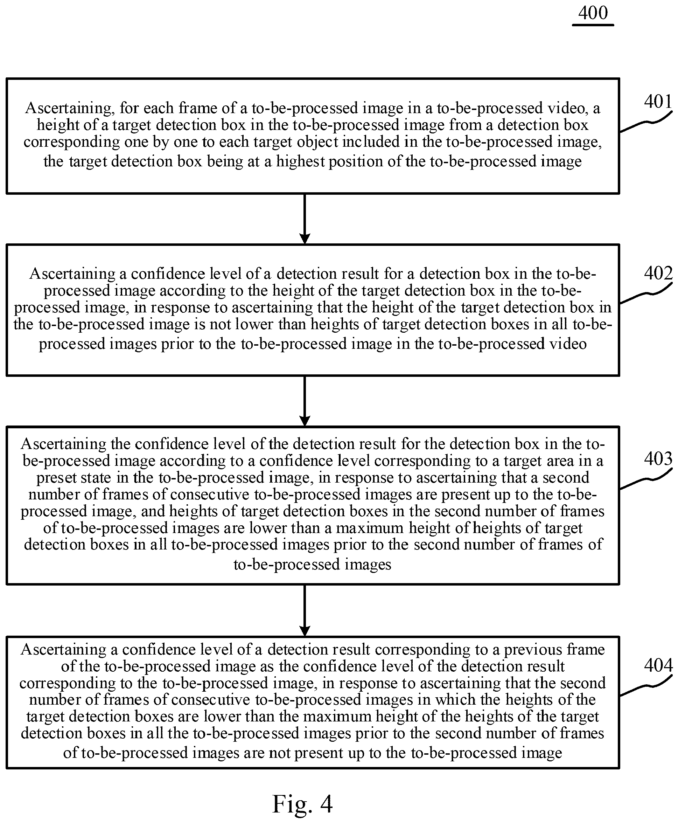

Further referring to Fig. 4, Fig. 4 illustrates a schematic flow 400 of the method for ascertaining a target detection confidence level according to another embodiment of the present disclosure, the flow 400 including following steps.

Step 401, ascertaining, for each frame of a to-be-processed image in a to-be-processed video, a height of a target detection box in the to-be-processed image from a detection box corresponding one by one to each target object included in the to-be-processed image, the target detection box being at a highest position of the to-be-processed image.

Step 402, ascertaining a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

Step 403, ascertaining the confidence level of the detection result for the detection box in the to-be-processed image according to a confidence level corresponding to a target area in a preset state in the to-be-processed image, in response to ascertaining that a second number of frames of consecutive to-be-processed images are present up to (and including) the to-be-processed image, and heights of target detection boxes in the second number of frames of to-be-processed images are lower than a maximum height of heights of target detection boxes in all to-be-processed images prior to the second number of frames of to-be-processed images.

Step 404, ascertaining a confidence level of a detection result corresponding to a previous frame of the to-be-processed image as the confidence level of the detection result corresponding to the to-be-processed image, in response to ascertaining that the second number of frames of consecutive to-be-processed images in which the heights of the target detection boxes are lower than the maximum height of the heights of the target detection boxes in all the to-be-processed images prior to the second number of frames of to-be-processed images are not present up to (and including) the to-be-processed image.

Here, the preset state is used to represent that a detection box of a target object included in a third number of frames of to-be-processed images up to (and including) the above to-be-processed image has an intersection with the target area.

In this embodiment, it can be seen from Fig. 4 that, as compared with an embodiment corresponding to Fig. 2, the flow 400 of the method for ascertaining a target detection confidence level in this embodiment emphasizes the way in which the confidence level of the detection result corresponding to the to-be-processed image is ascertained in various situations, thereby extending the application range of the method for ascertaining the confidence level of the detection result corresponding to the to-be-processed image.

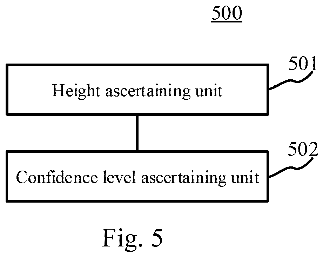

Further referring to Fig. 5, as an implementation of the method shown in Fig. 2, an embodiment of the present disclosure provides an apparatus for ascertaining a target detection confidence level. An embodiment of the apparatus corresponds to an embodiment of the method shown in Fig. 2. In addition to the features described below, an embodiment of the apparatus may further include features identical or corresponding to those in an embodiment of the method shown in Fig. 2, and bring effects identical or corresponding to those in an embodiment of the method shown in Fig. 2. The apparatus may be applied in various electronic devices.

As shown in Fig. 5, the apparatus 500 for ascertaining a target detection confidence level in this embodiment includes: a height ascertaining unit 501, configured to ascertain, for each frame of a to-be-processed image in a to-be-processed video, a height of a target detection box in the to-be-processed image from a detection box corresponding one by one to each target object included in the to-be-processed image, the target detection box being at a highest position of the to-be-processed image; and a confidence level ascertaining unit 502, configured to ascertain a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

In some alternative implementations of this embodiment, the to-be-processed image is divided into a first number of target areas from a preset height to a lower edge. The confidence level ascertaining unit is further configured to: ascertain the confidence level of the detection result for the detection box in the to-be-processed image according to a confidence level corresponding to a target area in a preset state in the to-be-processed image, in response to ascertaining that a second number of frames of consecutive to-be-processed images are present up to the to-be-processed image, and heights of target detection boxes in the second number of frames of to-be-processed images are lower than a maximum height of heights of target detection boxes in all to-be-processed images prior to the second number of frames of to-be-processed images. Here, the preset state is used to represent that a detection box of a target object included in a third number of frames of to-be-processed images up to (and including) the above to-be-processed image has an intersection with the target area.

In some alternative implementations of this embodiment, the confidence level ascertaining unit 502 is further configured to: ascertain the confidence level of the detection result for the detection box in the to-be-processed image according to the confidence level corresponding to the target area in the preset state in the to-be-processed image, in response to ascertaining that the second number of frames of consecutive to-be-processed images are present up to the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that a trajectory of the target object disappears from the to-be-processed image. Here, the disappearance of the trajectory of the target object represents that, up to the to-be-processed image, the target object moves out of a capture range of a video acquisition apparatus of the to-be-processed video.

In some alternative implementations of this embodiment, the confidence level ascertaining unit 502 is further configured to: ascertain a target area at the highest position of the to-be-processed image from target areas in the preset state in the to-be-processed image; and ascertain a confidence level corresponding to the target area at the highest position as the confidence level of the detection result for the detection box in the to-be-processed image.

In some alternative implementations of this embodiment, a state of each target area in the first number of target areas is ascertained by: determining, from a to-be-processed image corresponding to the target area in a non-preset state to a current to-be-processed image, that the target area in the current to-be-processed image is in the preset state, in response to ascertaining that a difference value between a number of to-be-processed images having a detection box corresponding to the target area and a number of to-be-processed images having no detection box corresponding to the target area is greater than a preset threshold value; and determining, from a to-be-processed image corresponding to the target area in the preset state to a current to-be-processed image, that the target area in the current to-be-processed image is in the non-preset state, in response to ascertaining that a third number of frames of consecutive to-be-processed images having no detection box corresponding to the target area are present.

In some alternative implementations of this embodiment, the confidence level ascertaining unit 502 is further configured to: ascertain a confidence level of a detection result corresponding to a previous frame of the to-be-processed image as the confidence level of the detection result corresponding to the to-be-processed image, in response to ascertaining that the second number of frames of consecutive to-be-processed images in which the heights of the target detection boxes are lower than the maximum height of the heights of the target detection boxes in all the to-be-processed images prior to the second number of frames of to-be-processed images are not present up to the to-be-processed image.

In some alternative implementations of this embodiment, the confidence level ascertaining unit 502 is further configured to: ascertain a target to-be-processed image including a target object and closest to the to-be-processed image, in response to ascertaining that the second number of frames of consecutive to-be-processed images are present up to the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that the target object is not detected in the to-be-processed image; ascertain a detection box at the highest position of the to-be-processed image from historical trajectory information corresponding to the target object included in the target to-be-processed image; and ascertain the confidence level of the detection result for the detection box in the to-be-processed image according to the height of the detection box at the highest position in the to-be-processed image and the preset height.

In this implementation, the confidence level of the detection result for the detection box in the to-be-processed image is ascertained according to the height of the target detection box in the to-be-processed image. Accordingly, a simple method of ascertaining a target detection confidence level is provided, and thus, the confidence level of the detection result corresponding to the to-be-processed image may be quickly ascertained.

According to an embodiment of the present disclosure, the present disclosure further provides an electronic device, a readable storage medium, a roadside device, a cloud control platform and a computer program product.

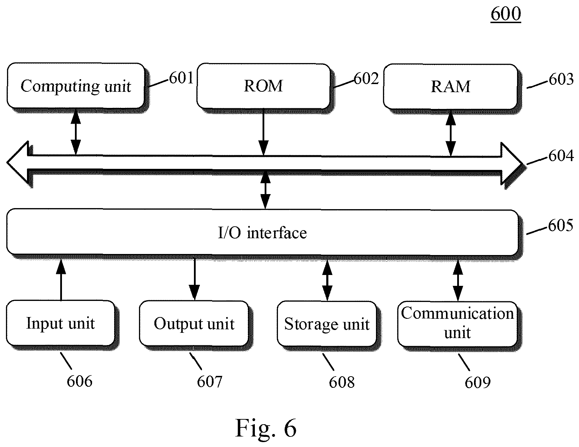

Fig. 6 is a schematic block diagram of an example electronic device 600 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as a personal digital processor, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device 600 includes a computing unit 601, which may execute various appropriate actions and processes in accordance with a computer program stored in a read-only memory (ROM) 602 or a program loaded into a random access memory (RAM) 603 from a storage unit 608. The RAM 603 also stores various programs and data required by operations of the device 600. The computing unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; the storage unit 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computing unit 601 may be various general-purpose and/or special-purpose processing assemblies having processing and computing capabilities. Some examples of the computing unit 601 include, but not limited to, a central processing unit (CPU), a graphics processing unit (GPU), various dedicated artificial intelligence (AI) computing chips, various computing units that run a machine learning model algorithm, a digital signal processor (DSP), any appropriate processor, controller and microcontroller, etc. The computing unit 601 performs the various methods and processes described above, for example, the method for ascertaining a target detection confidence level. For example, in some embodiments, the method for ascertaining a target detection confidence level may be implemented as a computer software program, which is tangibly included in a machine readable medium, for example, the storage unit 608. In some embodiments, part or all of the computer program may be loaded into and/or installed on the device 600 via the ROM 602 and/or the communication unit 609. When the computer program is loaded into the RAM 603 and executed by the computing unit 601, one or more steps of the above method for ascertaining a target detection confidence level may be performed. Alternatively, in other embodiments, the computing unit 601 may be configured to perform the method for ascertaining a target detection confidence level through any other appropriate approach (e.g., by means of firmware).

Various embodiments of the systems and technologies described in this article may be implemented in digital electronic circuit systems, integrated circuit systems, field programmable gate arrays (FPGA), application specific integrated circuits (ASIC), application-specific standard products (ASSP), system-on-chip (SOC), load programmable logic device (CPLD), computer hardware, firmware, software, and/or their combinations. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of embodiments of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of embodiments of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computer system may include a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host, and is a host product in a cloud computing service system, so as to solve the defects of difficult management and weak service extendibility existing in conventional physical hosts and VPS services.

In addition to the electronic device, the roadside device may include a communication part. The electronic device and the communication part may be integrated together, or set separately. The electronic device may acquire data (e.g., an image and a video) of a perception device (e.g., a camera), to perform video processing and data computing.

The cloud control platform performs processing in a cloud, and the electronic device included in the cloud control platform may acquire the data (e.g., the image and the video) of the perception device (e.g., the camera), to perform the video processing and the data computing. The cloud control platform may also be referred to as a cooperative vehicle-infrastructure management platform, an edge computing platform, a cloud computing platform, a central system, or the like.

According to the technology of embodiments of the present disclosure, the confidence level of the detection result for the detection box in the to-be-processed image is ascertained according to the height of the target detection box in the to-be-processed image. Accordingly, a simple method of ascertaining a confidence level is provided, and thus, the confidence level of the detection result corresponding to the to-be-processed image may be quickly ascertained.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for ascertaining a target detection confidence level, comprising:
ascertaining (201, 401), for each frame of a to-be-processed image in a to-be-processed video, a height of a target detection box in the to-be-processed image from a detection box corresponding one by one to each target object included in the to-be-processed image, the target detection box being at a highest position of the to-be-processed image; and
ascertaining (202, 402) a confidence level of a detection result for a detection box in the to-be-processed image according to the height of the target detection box in the to-be-processed image, in response to ascertaining that the height of the target detection box in the to-be-processed image is not lower than heights of target detection boxes in all to-be-processed images prior to the to-be-processed image in the to-be-processed video.

2. The method according to claim 1, wherein the to-be-processed image is divided into a first number of target areas from a preset height to a lower edge, and
the method further comprises:
ascertaining (403) the confidence level of the detection result for the detection box in the to-be-processed image according to a confidence level corresponding to a target area in a preset state in the to-be-processed image, in response to ascertaining that a second number of frames of consecutive to-be-processed images are present up to the to-be-processed image, and heights of target detection boxes in the second number of frames of to-be-processed images are lower than a maximum height of heights of target detection boxes in all to-be-processed images prior to the second number of frames of to-be-processed images, wherein the preset state is used to represent that a to-be-processed image comprising the detection box of the target object having an intersection with the target area is present in a third number of frames of to-be-processed images up to the to-be-processed image.

3. The method according to claim 2, wherein the ascertaining (403) the confidence level of the detection result for the detection box in the to-be-processed image according to the confidence level corresponding to the target area in the preset state in the to-be-processed image, in response to ascertaining that the second number of frames of consecutive to-be-processed images are present up to the to-be-processed image, and heights of target detection boxes in the second number of frames of to-be-processed images are lower than the maximum height of heights of target detection boxes in all to-be-processed images prior to the second number of frames of to-be-processed images comprises:
ascertaining the confidence level of the detection result for the detection box in the to-be-processed image according to the confidence level corresponding to the target area in the preset state in the to-be-processed image, in response to ascertaining that the second number of frames of consecutive to-be-processed images are present up to the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that a trajectory of the target object disappears from the to-be-processed image, wherein the disappearance of the trajectory of the target object represents that, up to the to-be-processed image, the target object moves out of a capture range of a video acquisition apparatus of the to-be-processed video.

4. The method according to claim 2 or 3, wherein the ascertaining (403) the confidence level of the detection result for the detection box in the to-be-processed image according to the confidence level corresponding to the target area in the preset state in the to-be-processed image comprises:
ascertaining a target area at the highest position of the to-be-processed image from target areas in the preset state in the to-be-processed image; and
ascertaining a confidence level corresponding to the target area at the highest position as the confidence level of the detection result for the detection box in the to-be-processed image.

5. The method according to claim any one of claims 2-4, wherein a state of each target area in the first number of target areas is ascertained by:
determining, from a to-be-processed image corresponding to the target area in a non-preset state to a current to-be-processed image, that the target area in the current to-be-processed image is in the preset state, in response to ascertaining that a difference value between a number of to-be-processed images having a detection box corresponding to the target area and a number of to-be-processed images having no detection box corresponding to the target area is greater than a preset threshold value; and
determining, from a to-be-processed image corresponding to the target area in the preset state to a current to-be-processed image, that the target area in the current to-be-processed image is in the non-preset state, in response to ascertaining that a third number of frames of consecutive to-be-processed images having no detection box corresponding to the target area are present.

6. The method according to any one of claims 2-5, further comprising:
ascertaining (404) a confidence level of a detection result corresponding to a previous frame of the to-be-processed image as the confidence level of the detection result corresponding to the to-be-processed image, in response to ascertaining that the second number of frames of consecutive to-be-processed images in which the heights of the target detection boxes are lower than the maximum height of the heights of the target detection boxes in all the to-be-processed images prior to the second number of frames of to-be-processed images are not present up to the to-be-processed image.

7. The method according to any one of claims 2-6, further comprising:
ascertaining a target to-be-processed image including a target object and closest to the to-be-processed image, in response to ascertaining that the second number of frames of consecutive to-be-processed images are present up to the to-be-processed image, and the heights of the target detection boxes in the second number of frames of to-be-processed images are lower than the maximum height of the heights of the target detection boxes in all the to-be-processed images prior to the second number of frames of to-be-processed images, and in response to ascertaining that the target object is not detected in the to-be-processed image;
ascertaining a detection box at the highest position of the to-be-processed image from historical trajectory information corresponding to the target object included in the target to-be-processed image; and
ascertaining the confidence level of the detection result for the detection box in the to-be-processed image according to the height of the detection box at the highest position in the to-be-processed image and the preset height.

8. An apparatus (500) for ascertaining a target detection confidence level, comprising a plurality of modules (501, 502) configured to implement the method according to any one of claims 1-7.

9. An electronic device (600), comprising:
at least one processor (601); and
a memory (602, 603, 608), communicatively connected with the at least one processor (601),
the memory (602, 603, 608) storing instructions executable by the at least one processor (601), and the instructions, when executed by the at least one processor (601), causing the at least one processor (601) to perform the method according to any one of claims 1-7.

10. A non-transitory computer readable storage medium (602, 603, 608), storing computer instructions, the computer instructions being used to cause a computer to perform the method according to any one of claims 1-7.

11. A roadside device, comprising the electronic device (600) according to claim 9.

12. A cloud control platform, comprising the electronic device (600) according to claim 9.

13. A computer program product, comprising a computer program, the computer program, when executed by a processor (601), implementing the method according to any one of claims 1-7.
